# EUROPEAN PATENT SPECIFICATION

(11) **EP 0 625 863 B1**
(45) Date of publication and mention of the grant of the patent: **13.06.2001**
(21) Application number: 94302745.8
(22) Date of filing: 18.04.1994
(51) Int. Cl.: H04Q 7/22, H04B 17/00

(54) **Dual stage RSSI handoff trigger**
Auslöser mit zweistufigen Feldstärkmessung für das Weiterreichen von Funkverbindungen
Déclencheur de transferts d'appel à mesure d'intensité du signal en deux étapes

(30) Priority: 07.05.1993 US 57970
(43) Date of publication of application: 23.11.1994
(73) Proprietor: Nortel Networks Limited, Montreal, Quebec H2Y 3Y4 (CA)
(72) Inventor: Willhoff, Steven J., Richardson, Texas 75081 (US); Meche, Paul S., Richardson, Texas 75082 (US); Mayes, John S., Dallas, Texas, 75230 (US); LaBauve, Lance Miguel, Plano, Texas 75075 (US); Pyle, Mark Bruce, Richardson, Texas 75082 (US)
(74) Representative: Ryan, John Peter William

(56) References cited:
- WO-A-91/19403
- US-A- 4 556 760

## Description

### Background of the Invention

### 1. Field of the Invention

The invention relates generally to a method and apparatus for determining and executing correct handoff decisions in a cellular system. Specifically, the invention involves determining the correct handoff time (decisions) based on both a long term and short term measurement of the signal level.

### 2. Description of the Related Art

Correct handoff decisions are a prime requirement for a successful cellular system. The ability to detect the need to handoff a cellular call from one base station to another at the appropriate coverage point is essential in maintaining both the integrity of the frequency plan defined by the cellular operator, as well as the mobile subscriber's call quality.

The ability of the base station, also called a land station, to correctly measure the received signal strength of the mobile station is the core building block of this system requirement. The land station must provide a precise and consistent measure of the mobile station's signal strength. The land station must react appropriately to changes in the signal, without overreacting to signal fluctuations prevalent in radio signals due to fading conditions. Overreacting to fluctuating signals can have as detrimental an impact to proper frequency containment as not being sufficiently reactive to true handoff conditions.

Single stage methods to determine handoff conditions include approaches that rely exclusively on short term measurements and approaches that rely exclusively on long term averaging of the signal over predetermined measurement intervals. However, such single stage methods for measuring a mobile station's signal strength for handoff detection purposes are deficient in several ways.

Methods that rely exclusively on short term measurements are subject to error due to the highly fluctuating nature of the signal. These methods rely on periodic sampling of the signal at intervals of several seconds to many seconds. This practice contributes to poor handoff detections due to the long latencies that may exist between measurements. In effect, this method may make premature decisions due to the effects of short fades on the signal. Additionally, this method may not be sufficiently reactive to a true handoff condition due to the large latency that exists between measurements.

Long term averaging methods, which utilize continual measurements at relatively frequent intervals and then average them over a period of time, provide a more even view of the mobile station's signal. Long term averaging smooths out the effects of short term fades in the signal. Long term averaging is less over reactive to fluctuating signals, and provides a timely handoff decision, due to the relatively frequent measurement and signal average update interval. However, long term averaging methods are also deficient in that they may build in a historical bias to the signal strength based on events that occurred to the signal a relatively long time ago.

Deficiencies in long term averaging approaches are related to the historical bias built in to the averaged RSSI (Received Signal Strength Indication). This may result in a premature handoff decision based on a deep fade occurring in an otherwise strong signal. Such conditions often occur as a result of shadowing effects of buildings in an urban environment.

Due to the historical bias built into a long term averaging approach, the previous high signal strength measurements tend to soften the effect of the current low signal strength measurements. As older, higher strength measurements are replaced in the average by more current, lower strength measurements, the average signal strength begins to fall. If the mobile station then begins to move away from the shadow effect, the actual current signal strength begins to rise at a slow rate. However, the average RSSI is still falling, even though the current true signal strength is rising. This results from the fact that as the older and higher measurements are removed from the average, they are replaced by the new signals that are rising in strength, but still lower than the signals they are replacing in the average. This may result in a false handoff condition detection.

Another shortcoming of the long term averaging method is that the RSSI reported at the time of the handoff trigger contains the smoothed average of the signal over a relatively long time interval. In a truly falling signal scenario, this long term representation of the signal is typically much stronger than the actual current signal. This impacts the effectiveness of the handoff process because the target cell selection is based on which of the adjacent cells measure a signal stronger than the value reported by the source cell (usually using a hysteresis mechanism added to the source measurement). The effect of the long term signal representation on this process is that the signal strength of the adjacent cells often may not exceed the long term representation of the source signal, even though the adjacent cells would be able to exceed the current signal strength value of the source signal by the hysteresis. As a result, handoff action is delayed, which may cause both a violation of the frequency plan as well as reduced voice quality to the mobile subscriber as the signal continues to degrade. WO-A-91 19403 describes a cellular radio system comprising a plurality of base stations each having a radio transceiver serving a cell of the system and a mobile station having a radio receiver for communicating to one or other of the base stations. On the one hand relative gradual variations in handover criterion can be assessed and on the other hand relatively sudden variations in handover criterion can also be assessed.

### Summary of the Invention

It is therefore an object of the invention to provide a method and apparatus for determining a correct handoff decision that overcomes the shortcomings found in single stage methods. Accordingly, it is an object of the invention to avoid poor handoff decisions caused by methods that rely exclusively on short term measurements which are subject to error due to the highly fluctuating nature of the signal. It is a further object of the invention to avoid premature handoff decisions due to the effects of short fades on the signal. It is a further object of the invention to avoid a handoff decision that is not sufficiently reactive to a true handoff condition due to the relatively large latency that may exist between short term measurements.

It is still another object of this invention to eliminate the occurrence of false handoff triggers exhibited by the historical bias that may exist from a long term averaging process. It is also an object of the invention to address the problem of delaying the handoff due to the adjacent cell measurements being unable to exceed the historically biased long term average signal strength representation found in a pure averaging system.

These and other objects of the invention are accomplished by maintaining both a long term representation of the signal and a short term representation of the current signal level. The long term representation is used as the initial trigger for a handoff condition. The averaging process removes the effects of short term fades in the signal that may cause a premature handoff decision due to these short term signal fluctuations. This initial trigger is then qualified by examining the short term current value of the signal. The actual handoff trigger is only realized when both values indicate that the handoff threshold has been exceeded. This approach eliminates the occurrence of false handoff triggers exhibited by the historical bias that may exist from the averaging process. Additionally, a method according to the invention reports the short term signal strength value as the mobile station's signal strength for comparisons to the signal strength measured on the adjacent cells. Since this short term value more closely represents the current measure of the signal rather than a long term average, it provides a truer comparison with the current measurements made on the adjacent cells.

According to the invention, a method is provided for correctly determining when a phone call on a mobile station in a cellular system on a particular voice channel in one cell site should be handed off to a voice channel in another cell site. A first signal value, indicative of a long term averaged signal strength of the signal received from the mobile station, is compared to a predetermined threshold value. A second signal value, indicative of the short term value of the received signal strength, is compared to the threshold value if the first signal value is below the threshold value. A handoff condition exists if both the first and second signal values are below the threshold.

Specifically the present invention provides a method of correctly determining, in a cellular system, when a phone call on a mobile station on a particular voice channel in one cell site should be handed off to a voice channel in another cell site, characterised in that the method comprises the steps of: sampling signals received from said mobile station to determine a signal strength of said received signals at predetermined intervals and outputting a received signal strength indication (RSSI) sample at said predetermined intervals; calculating a long term average of said samples at said predetermined intervals once a predetermined number of said samples have been received; calculating a short term average of said samples; comparing said long term average to a predetermined threshold value; comparing said short term average to said threshold value if said long term average is below said threshold value; and determining that said handoff condition exists if both said long term and short term averages are below said threshold value.

In a preferred embodiment the method additionally comprises the step of sending a handoff request to a controller after determining that a handoff condition exists, said handoff request including said second signal value for comparison to adjacent cell site signal strength levels.

Preferably a time period over which said first signal value is averaged is longer than a time period over which said second signal is averaged.

In a further preferred embodiment a time period over which said second signal value is averaged is correlated to a time period over which a signal strength value is measured by locate/receive devices of adjacent cells.

The method may also comprise the steps of: setting a handoff guard timer after sending said handoff request; returning to step (a) if said handoff guard timer expires before a handoff command is received from said controller.

According to a second aspect of the present invention there is provided a voice channel apparatus for correctly determining, in a cellular system, when a phone call on a mobile station on a particular voice channel in one cell site should be handed off to a voice channel in another cell site, characterised in that the apparatus comprises: a receive channel for receiving signals from said mobile station; a cell controller interface for receiving a threshold value from a cell controller; a controller, receiving samples representing a signal strength of said received signals from said receive channel, said controller maintaining a long and short term buffer and storage locations for a long term average of said long term buffer and a short term average of said short term buffer, said controller including a processor which determines a handoff condition when both said long term average and said short term average are less than said threshold value, said controller sending a handoff request, including said short term average, to said cell controller through said cell controller interface upon determination of said handoff condition.

The Dual Stage RSSI handoff trigger approach according to the invention balances the effects of the long term signal characteristics with the current, short term, assessment of the signal, thereby providing a method that is superior to single stage methods of handoff trigger detection.

The benefits to the cellular system operation with respect to handoff conditions detection provided by the Dual Stage RSSI handoff Trigger method according to the invention over single stage handoff detection methods are threefold. First, the signal strength measurements are not over reactive to fluctuating signals. Second, the signal strength measurements are not negatively affected by the historical bias built into averaging. Third, the integrity of the comparisons to adjacent cell signal strength measurements is not compromised due to the historical bias built into averaging. These three factors provide for a consistent and stable handoff detection method that prevents both premature and delayed handoff condition triggers. This positively effects the mobile subscriber's call quality, and maintains channel coverage within the cellular operators frequency plan.

Additional features and advantages of the invention will be made clear from the accompanying drawings and the following detailed description.

### Brief Description of the Drawings

Fig. (1a) shows an overview of the cellular system with a cell controller and a number of cell sites.

Fig. (1b) shows an overview of a method according to the invention.

Fig. (1c) shows a block diagram of a Voice Channel in a base station.

Fig. (2) shows the initial steps taken by a base station upon receiving a command.

Fig. (3) shows the base station response for non ACTIVE VOICE commands.

Fig. (4) shows the base station response for ACTIVE VOICE commands.

Fig. (5) shows additional base station response steps for ACTIVE VOICE tasks.

Fig. (6) shows the base station responses with handoff pending.

Figs. 7a and 7b show the long term and short term RSSI sample buffers.

Figs. 8-10 show the steps of the DMS-MTX Cell Controller in controlling handoff sequences of a base station.

### Detailed Description of the Preferred Embodiments

Figure la shows the overall environment in which the handoff trigger, according to the invention is determined. Voice channels 10 in cell sites 12, 14 and 16 are connected to the Digital Multiplex Switch-Mobile Telephone Exchange (DMS-MTX) (also known as the Mobile Telephone Switching Office (MTSO)) 18. The DMS-MTX acts as a cell controller for a number of cells. The Voice Channels (VCH) are contained in base stations. The handoff trigger determines when a mobile phone call on a particular voice channel in one cell site should be handed off to a voice channel in another cell site. The base stations can also be configured as Locate Receivers (LCR) devices to provide the cell controller 18 with measured signal strength values in adjacent cells upon command of the cell controller in preparation for the handoff.

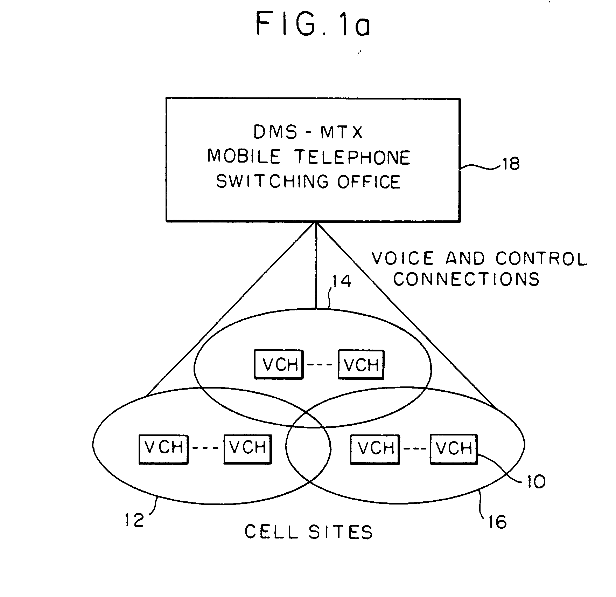

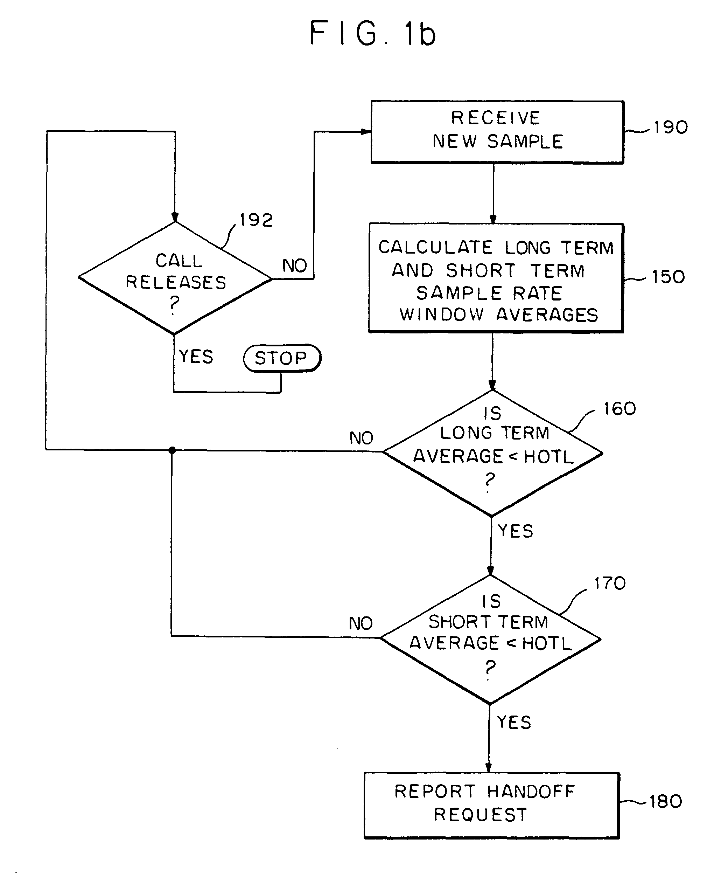

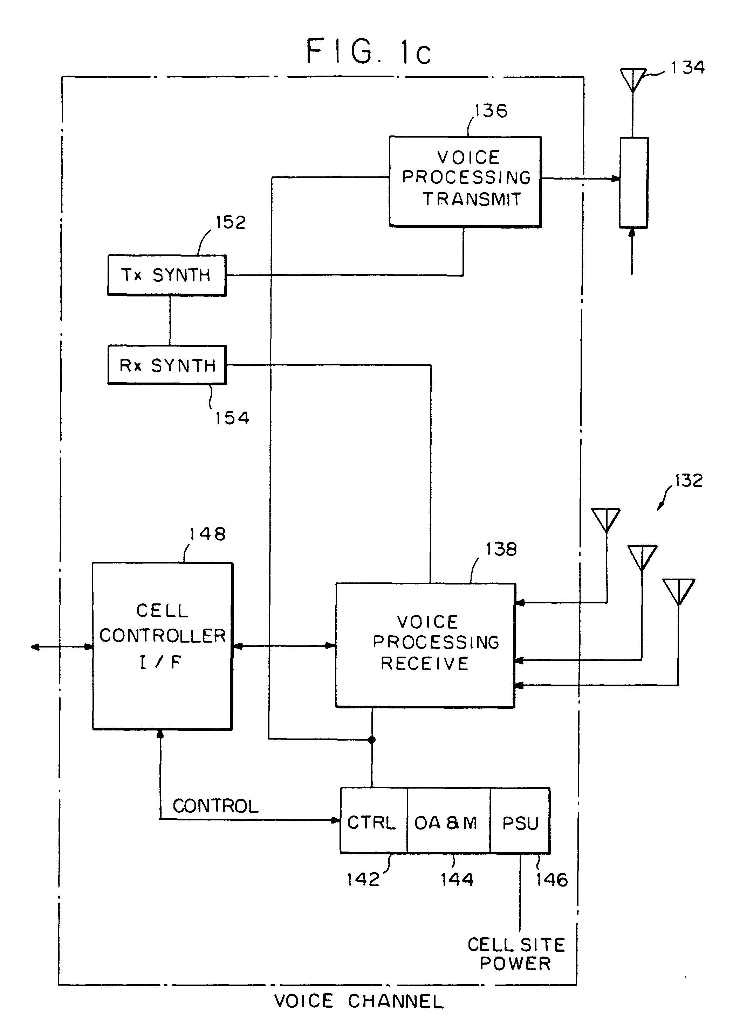

A simplified overview of the method of the present invention is presented in Fig. 1b. The Voice Channel (VCH) in the base station will use a long term RSSI average to determine when a handoff condition is to be checked. The long term RSSI average is computed by averaging samples representing the strength of the received signal, contained in a particular window of time, e.g. several seconds. The short term average is a the average over a smaller window of time, e.g typically tens to hundreds of milliseconds. The long and short term averages are calculated in step 150. If the entire sample rate window average (i.e. the long term average, also known as the long term sample rate (LTSR) average) is determined to be less than the handoff threshold (HOTL) in step 160, then the short term average (also known as the Second Stage Sample Rate (SSSR) average) is checked in step 170. If the short term average is also less than HOTL, then a handoff request is reported in step 180. If short term average is not less than HOTL, and the call does not release in step 192, new samples are received, new averages calculated and checked against HOTL. This is continued until both the short and long term averages are less than HOTL or the call releases. This can alternatively be described in a further simplified form as:
If LTSR buffer is full
then for every sample, the LTSR and SSSR averages are recalculated;
if LTSR < HOTL & SSSR < HOTL
then send handoff request
else do nothing
endif

Figure 1c shows a block diagram of the Voice Channel on which the method of the present invention is practiced. The VCH includes receive and transmit antennas 132 and 134, a voice processing transmit block 136 containing D/A converters and modulators, a voice processing receive block including A/D converters and demodulators. TX synth block 152 and RX synth block 154 provide appropriate frequencies for modulating and demodulating the transmitted and received signals. Block 144 provides operation, administration and maintenance (OA&M) functions. Block 146 is the power supply unit connecting to the cell site power. Controller block 142 provides control functions for the voice channel, including the necessary processing circuitry, e.g. a microprocessor, to determine long and short term averages, as well as sufficient memory (e.g. RAM) to maintain the long and short term buffers. Of course, other voice channel control functions may be performed by the processor. The controller block 142 receives the RSSI samples through the receive channel and stores and processes the samples as described herein. Finally, the controller block 142 communicates with the cell controller through interface 148, sending handoff requests and receiving voice channel parameters and commands.

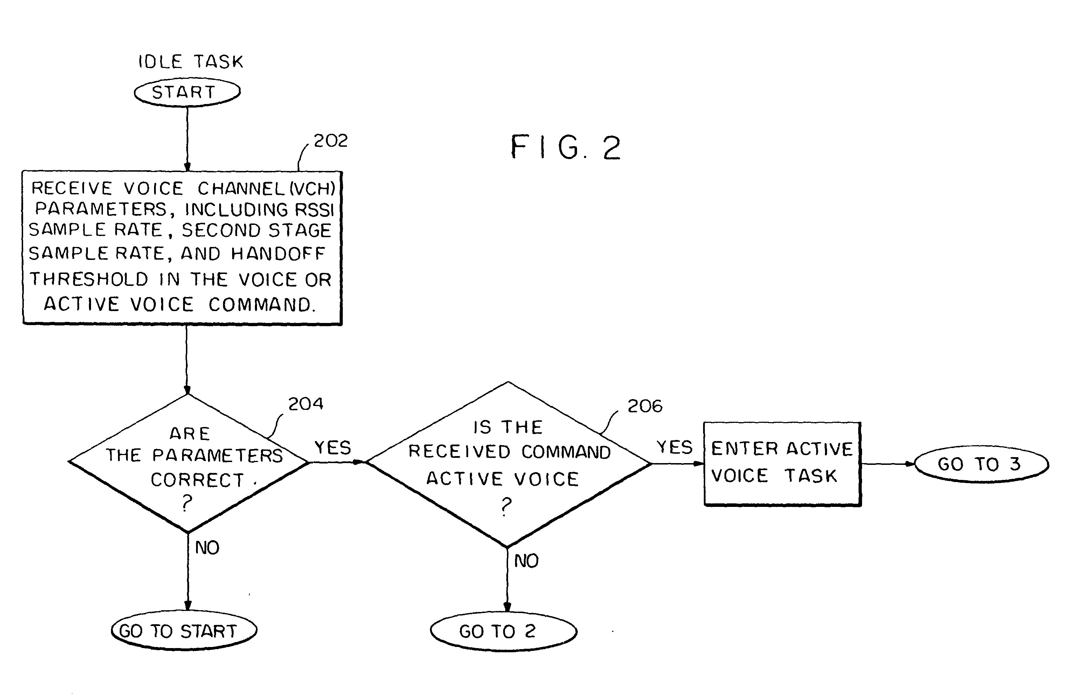

The Dual Stage RSSI handoff approach of a base station is shown in Figure 2. The DMS-MTX controller transmits the Voice Channel Parameters, including the RSSI Sample Rate (also known as the long term sample rate), the Second Stage Sample Rate (SSSR) (also known as the short term sample rate) and the handoff threshold to the base station in 202.

The Voice Channel parameters can vary among systems and from cell to cell. The RSSI Sample Rate gives the long term averaging time, i.e. the width of the window. Typical values of the window are in the range of 2.5 to 3.5 seconds. Wider ranges for the long term averaging widow are also possible. For instance, in one particular configuration, the range can vary from 0.32 seconds to 5.12 seconds. Optimum ranges will vary according to the system (i.e. the specific hardware and software) and the environment in which the system is utilized.

The short term sample rate, i.e. the SSSR or short term averaging time, should be correlated as closely as possible to the sample rate (i.e. averaging time) of the locate receivers (LCRs) in adjacent cells. The correlation with the LCRs sample rate means that the signal strength value provided as the mobile station's signal strength for comparisons to the signal strength measured on the adjacent cells at handoff time will provide the best comparison with the measurements made on the adjacent cells. Optimum performance of the second stage sample rates is therefore a function of the LCR sample rates. The SSSR should optimally be within 100 ms of the averaging time for the LCRs. By way of example, in one particular embodiment, the SSSR can range from 20 - 300 ms with 120 ms being preferred, based on characteristics of the system and environment.

The handoff threshold is a configurable value with typical ranges of between -75 dBm and -90 dBm. Other Voice Channel parameter values are of course possible based on the particular environment in which the system is designed to operate. However, the SSSR should always be shorter than the LTSR.

The SAMPLE RATE field in the VOICE or ACTIVE VOICE commands controls the Long Term Sample Rate (LTSR). The SSSR field controls the Second Stage or short term sample rate. By way of example and not limitation, the VOICE and ACTIVE VOICE commands may define the (SSSR) in a four bit field. If the granularity of the sample rate is in 20 ms samples, a typical value, the range of the second stage averaging could be specified from 20 to 300 ms utilizing these four bits, with a 0 meaning disabled. Other granularities for the sample rate may be used according to system requirements.

Four bits may also be used to define the Long Term Sample Rate (LTSR). If, the granularity of the LTSR is blocks of 16 samples at 20 ms, then more than 5 seconds can be specified as the window length using the four bit field.

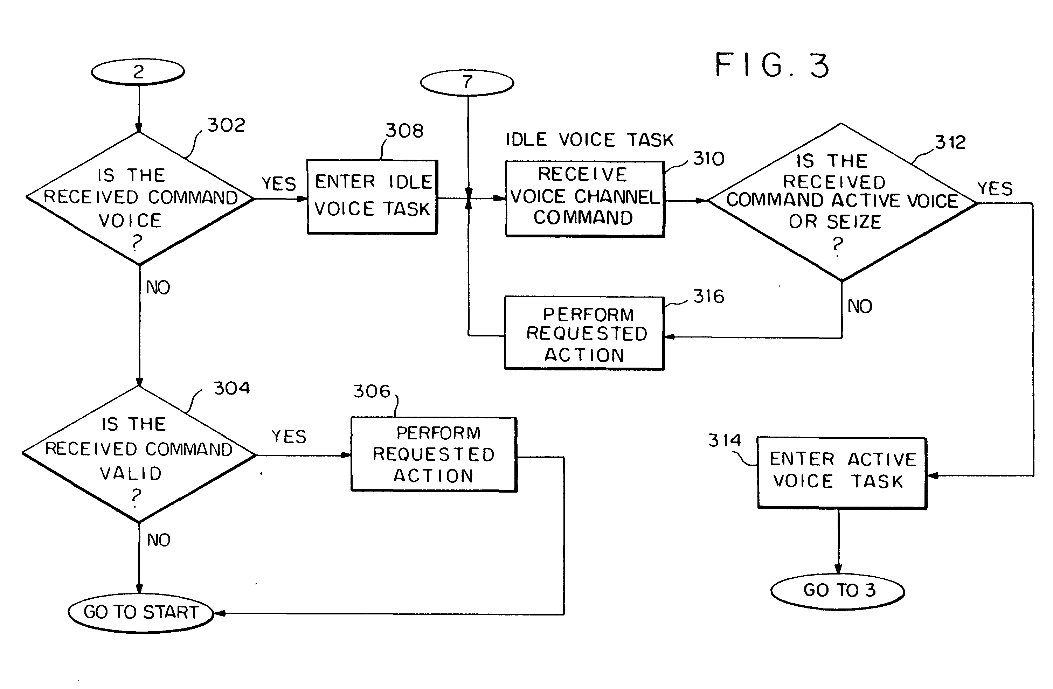

The base station checks the received parameters for correctness in step 204, by screening each field both for conformance to known ranges and completeness of the parameters. Appropriate error codes are returned to the controller if the voice channel detects a problem with a parameter. The received command is checked in step 206 to see if it is an ACTIVE VOICE command. Referring now to Figure 3, if the received command is not an ACTIVE VOICE command, the command is checked in step 302 to see if the received command is VOICE. If not, the validity of the command is determined in step 304, and following performance of the requested action in step 306, the base station returns to START. If the received command is VOICE, the IDLE VOICE TASK is entered in step 308 and voice channel commands are received in step 310. Upon receipt of either ACTIVE VOICE or SEIZE command in step 312, ACTIVE VOICE task is entered in step 314. Otherwise the base station performs the requested action in step 316.

The SEIZE command is the principal command used to transition a voice channel from the idle to the active state. The voice channel uses the operational parameters defined in the VOICE command. The SEIZE command also contains some initial information relating to the call that is to be set up on the voice channel. The ACTIVE VOICE command is essentially a combined VOICE and SEIZE command. The voice channel transitions from the idle to active task, but uses the operational parameters from the ACTIVE VOICE command. This also contains the initial information relating to the call to be set up. The ACTIVE VOICE command is not generally used, but it is available and may find uses in certain implementations.

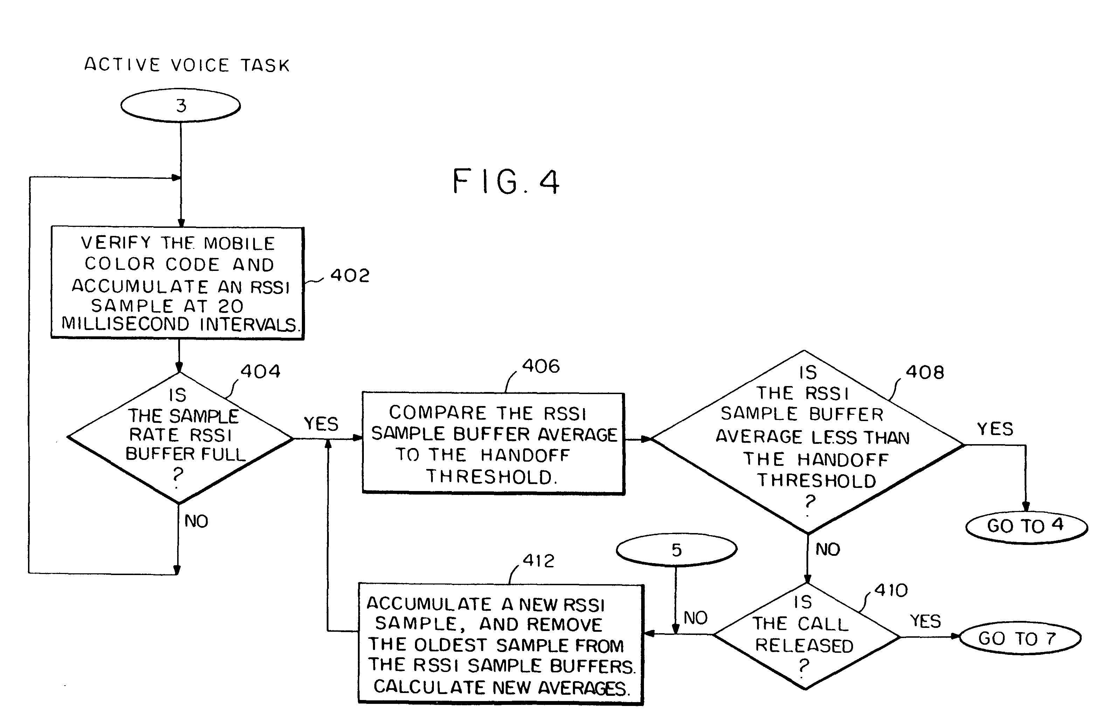

Referring to Figure 4, in the ACTIVE VOICE TASK, the mobile color code is verified. The mobile color code (Supervisory Auditory Tone (SAT) in analog calls, or the Digital Voice Color Code (DVCC) in digital calls) is a method used to identify that the correct mobile is on the correct voice channel as is known in the art. These are used to discriminate between voice channels that reuse the same radio frequency in the cellular system.

Additionally, in the ACTIVE VOICE TASK, an RSSI sample is accumulated at typical intervals of tens of milliseconds. RSSI levels are represented in the preferred embodiment as eight bit numbers (from 0 to 255), which correspond to signal strength levels of -130 dBm to -30 dBm. The RSSI buffer stores the RSSI sample values. The length of the RSSI buffer is determined by the sample rate and the sample interval, i.e. the length of the window and the number of samples per window. Thus, by way of example, an RSSI Sample Rate (also called the Long Term Sample Rate (LTSR)) of 3.2 seconds at 20 ms intervals, results in an RSSI buffer length of 160 eight bit samples. By way of example, an SSSR sample size of 5 samples, results from an SSSR window length of 100 ms at 20 ms intervals. Other buffer lengths sizes may also be used within the scope of the invention.

If the RSSI buffer is not full, as determined in step 404, the base station accumulates additional RSSI samples, as shown in step 402. If the RSSI sample buffer is full, the buffer average is compared to the handoff threshold in step 406. New averages are computed for each received sample, once the buffers are full. If the long term averaged value (RSSI sample buffer average) is greater than the handoff threshold, the base station determines whether the call has been released in step 410. If so, then the base station returns to the IDLE VOICE TASK. Note that the release can be processed at a number of different places in the flow of the system according to the invention. If the call is not released, then the base station accumulates a new RSSI sample and removes the oldest sample from the RSSI sample buffer. The base station then calculates new averages for both the SSSR buffer average and the RSSI buffer average in step 412.

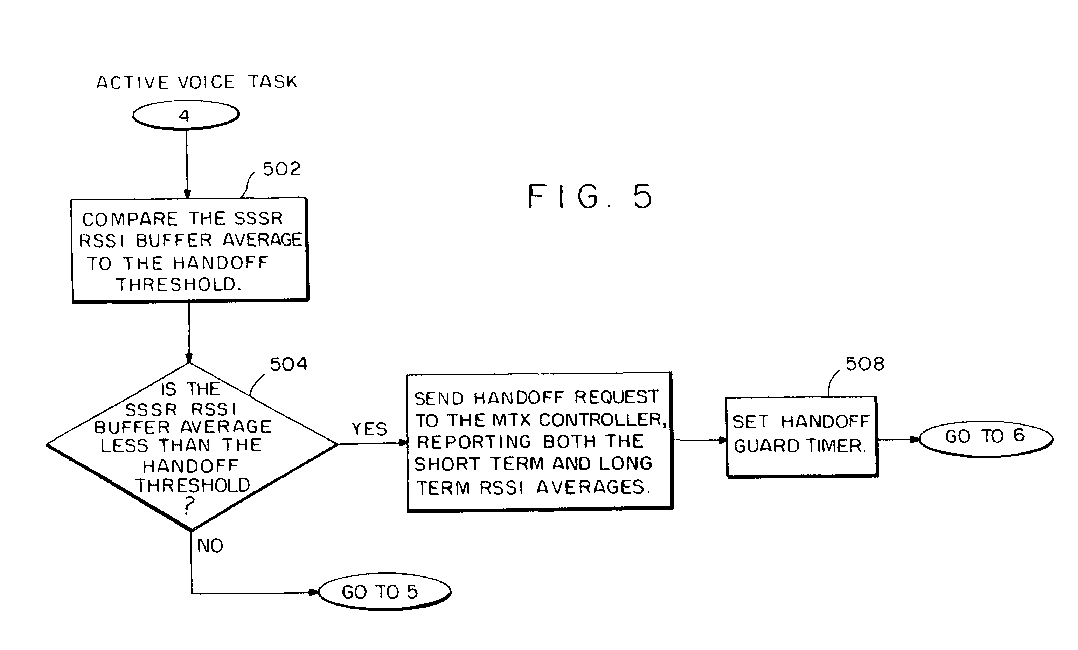

If the RSSI Sample buffer average is less than the handoff threshold in step 408, then the SSSR RSSI buffer average is compared to the handoff threshold in step 502, as shown in Figure 5. If the SSSR RSSI buffer average is greater than the handoff threshold, the second condition for a handoff trigger has not been met and new RSSI samples are accumulated in step 412.

If the SSSR RSSI buffer average is less than the handoff threshold in step 504, then the conditions for a handoff trigger have been met, i.e. both the long term average and the short term signal strength values are below the threshold. The handoff request is sent to the DMS-MTX controller, reporting both the short term and long term RSSI averages in step 506 and a handoff guard timer is set in step 508. Timer values will vary with the particular system being implemented with typical values ranging between 10 and 15 seconds, although other values may be used.

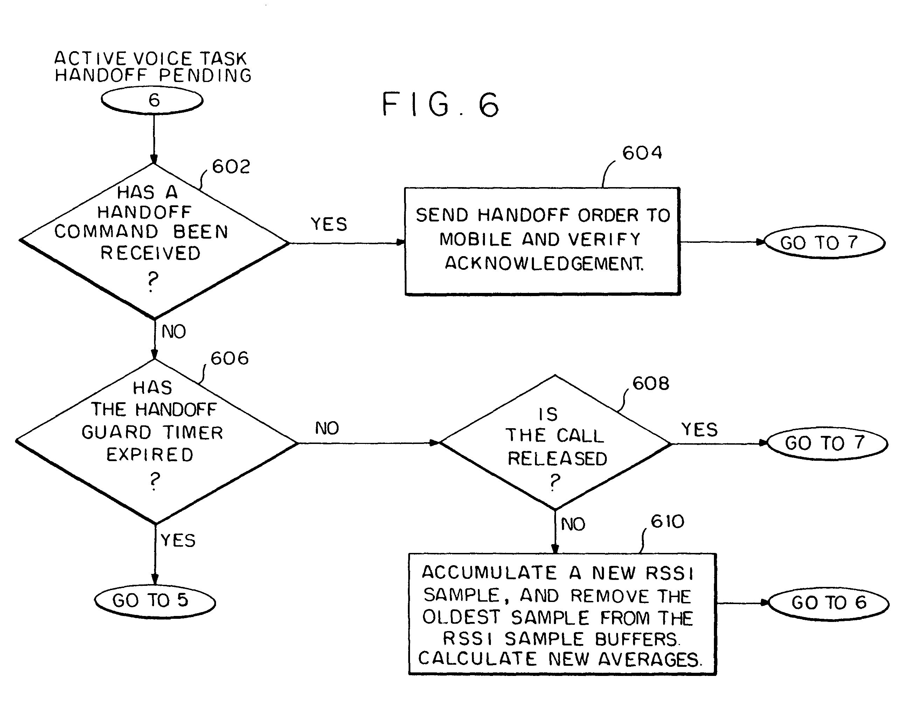

Referring to Fig. 6, the base station enters a handoff pending state awaiting a handoff command from the DMS-MTX Controller in step 602. If such a command is received, the base station sends the handoff order to the mobile station in step 604 and returns to the IDLE VOICE TASK. If the handoff guard timer expires in step 606, then the base station returns to step 412 to accumulate a new RSSI sample and update the averages. If the handoff guard timer has not expired, the base station checks whether the call has been released in step 608. If the call is not released (and the handoff guard timer has not expired) a new RSSI sample is accumulated and new averages are calculated in step 610, and the controller in the base station returns to step 602. Otherwise, if the call is released, the base station returns to the IDLE VOICE TASK.

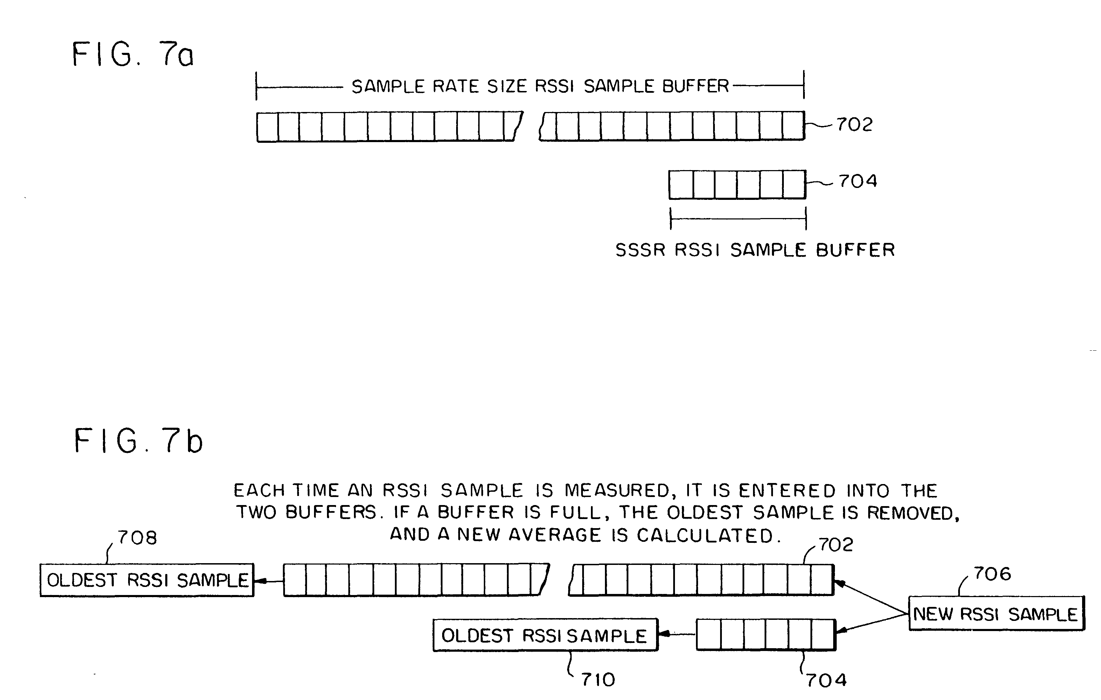

The RSSI Sample Rate Buffer (long term buffer) 702 and the SSSR RSSI Sample Buffer (short term) 704 are shown in Fig. 7a. As a new RSSI sample 706 is measured, it is entered into both the RSSI Sample Buffer 702 and the SSSR Sample Buffer 704. If the Buffer is full, then the oldest samples 708 and 710 are removed from their respective buffers and a new average is calculated for each buffer. The SSSR RSSI sample buffer contains the most recent samples of the RSSI Sample Rate buffer. The RSSI Sample Rate Buffer and the SSSR RSSI Sample Buffer may be implemented in conventional RAM.

The handoff request message includes both the short term SSSR average and the long term RSSI average. An RSSI Level message is one that the DMS-MTX controller can solicit from the voice channel, in which the base station reports the current RSSI averages. The RSSI Level message also contains both the short term SSSR average and the long term RSSI average.

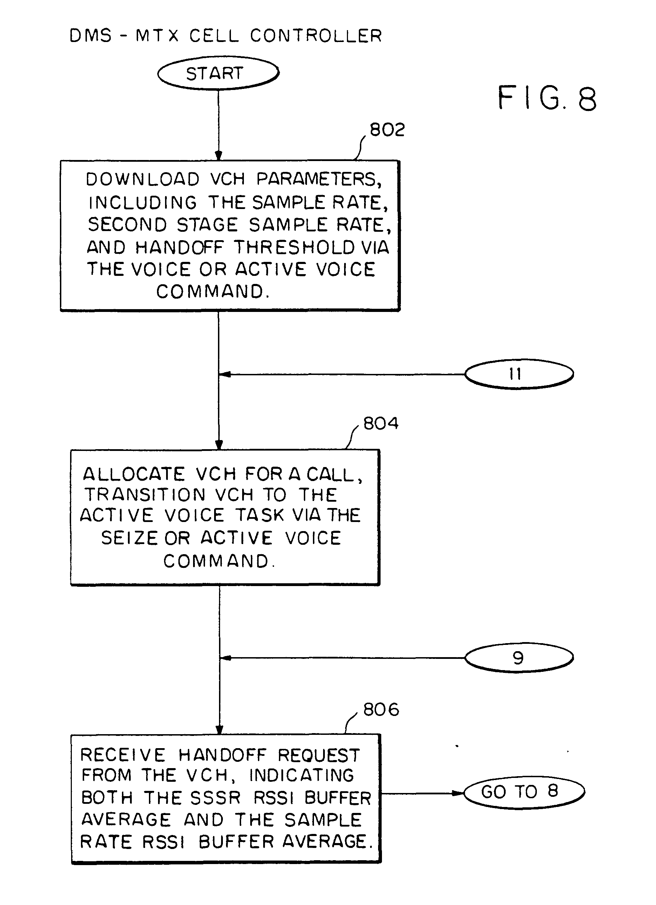

The method as seen from the DMS-MTX cell controller is shown in Fig. 8. The DMS-MTX controller can control multiple cells, each with multiple base stations. The DMS-MTX controller downloads the Sample Rate (i.e. the LTSR), Second Stage Sample Rate, and the handoff threshold via the VOICE or ACTIVE VOICE command in step 802. A Voice Channel (VCH) is allocated for a call and the VCH transitions to the ACTIVE VOICE TASK via the SEIZE or ACTIVE VOICE command in step 804. In step 806 the handoff request is received from the VCH of the base station which includes both the SSSR RSSI buffer average and the SAMPLE RATE RSSI buffer average.

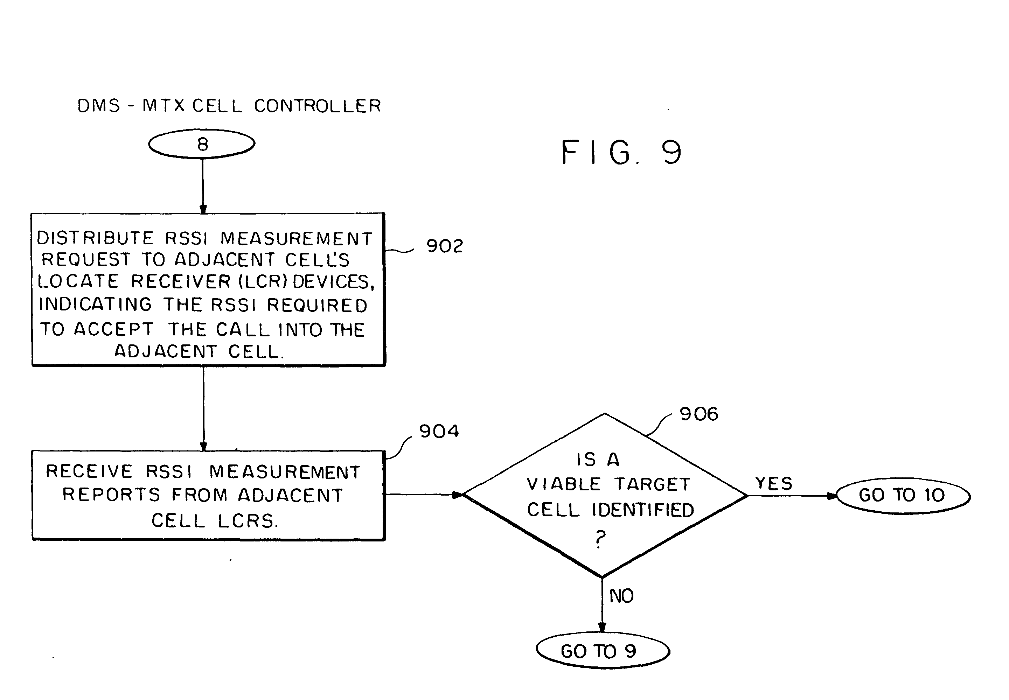

Referring to Figure 9, the DMS-MTX Cell Controller distributes an RSSI Measurement request to adjacent cells' Locate Receiver (LCR) devices indicating the RSSI required to accept the call into the adjacent cell, as shown in step 902. The required RSSI is based on the SSSR RSSI buffer average plus a hysteresis. In step 904, RSSI measurement reports are received from adjacent cells' LCRs. If a viable target cell is not identified in step 906, then the DMS-MTX Cell Controller returns to step 806 awaiting a handoff request.

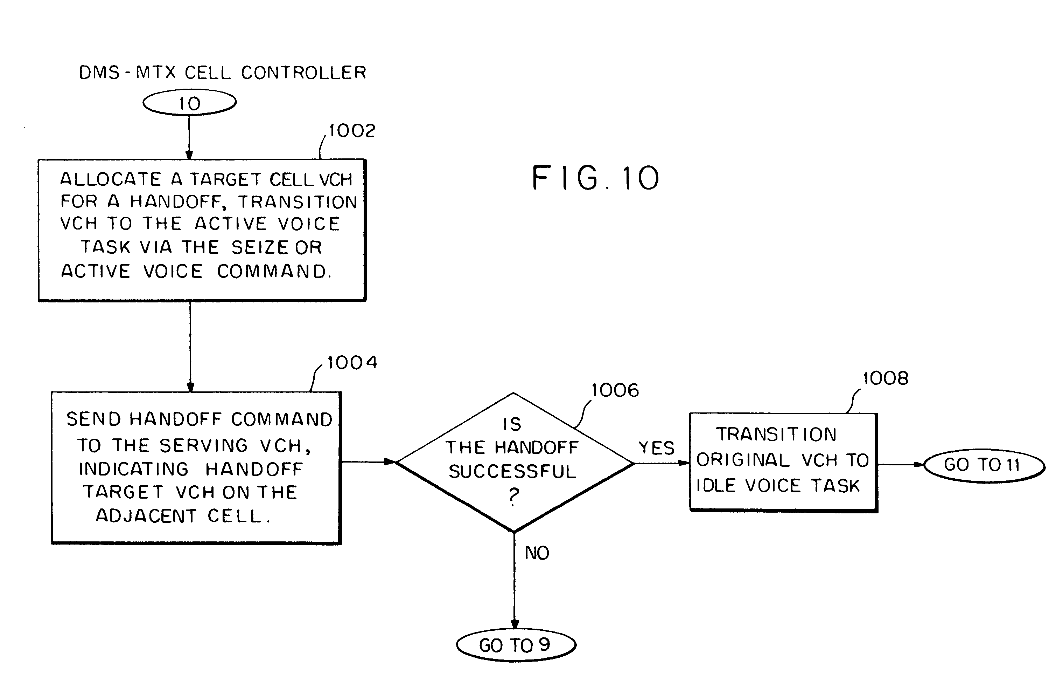

Referring to Fig. 10, if a viable target cell is identified, then a VCH is allocated for a handoff and the new VCH is transitioned to ACTIVE VOICE TASK via either the SEIZE or ACTIVE VOICE command in step 1002. The handoff command is sent in step 1004 to the serving VCH (i.e. the voice channel currently handling the call that generated the handoff request) indicating the handoff target VCH on the adjacent cell.

If the handoff is determined to be successful in step 1006, the original VCH transitions to IDLE VOICE TASK in step 1008 and the DMS-MTX Cell Controller returns to step 804.

While a preferred embodiment of the invention has been described, it will be understood that it is capable of further modifications, e.g. checking the short term average first and this application is intended to cover any variations, uses, or adaptations of the invention, following in general the principles of the invention and including such departures from the present disclosure as to come within knowledge or customary practice in the art to which the invention pertains and as may be applied to the essential features hereinbefore set forth and falling within the scope of the invention or the limits of the appended claims.

## Claims

1. A method of correctly determining, in a cellular system, when a phone call on a mobile station on a particular voice channel in one cell site should be handed off to a voice channel in another cell site, characterised in that the method comprises the steps of:
(a) sampling (190) signals received from said mobile station to determine a signal strength of said received signals at predetermined intervals and outputting a received signal strength indication (RSSI) sample at said predetermined intervals;
(b) calculating (150) a long term average of said samples at said predetermined intervals once a predetermined number of said samples have been received;
(c) calculating (150) a short term average of said samples;
(d) comparing (160) said long term average to a predetermined threshold value;
(e) comparing (170) said short term average to said threshold value if said long term average is below said threshold value; and
(f) determining (180) that said handoff condition exists if both said long term and short term averages are below said threshold value.

2. A method as recited in claim 1 further comprising the step of:
sending a handoff request (180) to a controller after determining that a handoff condition exists, said handoff request including said second signal value for comparison to adjacent cell site signal strength levels.

3. The method of claim 1 wherein a time period over which said first signal value is averaged is longer than a time period over which said second signal is averaged.

4. The method of claim 1 wherein a time period over which said second signal value is averaged is correlated to a time period over which a signal strength value is measured by locate/receive devices of adjacent cells.

5. The method as recited in claim 2 further comprising the steps of:
setting a handoff guard timer (508) after sending said handoff request; and
returning to step (a) if said handoff guard timer expires before a handoff command is received from said controller.

6. A voice channel apparatus for correctly determining, in a cellular system, when a phone call on a mobile station on a particular voice channel in one cell site should be handed off to a voice channel in another cell site, characterised in that the apparatus comprises:
a receive channel for receiving signals from said mobile station;
a cell controller interface (148) for receiving a threshold value from a cell controller;
a controller, (142) receiving samples representing a signal strength of said received signals from said receive channel, said controller maintaining a long and short term buffer and storage locations for a long term average of said long term buffer and a short term average of said short term buffer, said controller including a processor which determines a handoff condition when both said long term average and said short term average are less than said threshold value, said controller sending a handoff request, including said short term average, to said cell controller through said cell controller interface upon determination of said handoff condition.

## Patentansprüche

1. Verfahren zur korrekten Bestimmung, wann eine Telefongesprächsverbindung an einer Mobilstation auf einem bestimmten Sprachkanal an einer Zellenposition zu einem Sprachkanal in einer anderen Zellenposition in einem zellularen System übergeben werden sollte, dadurch gekennzeichnet, daß das Verfahren die folgenden Schritte umfaßt:
(a) Abtasten (190) von Signalen, die von der Mobilstation empfangen werden, um die Signalfeldstärke der empfangenen Signale zu vorgegebenen Intervallen zu bestimmen, und Ausgabe einer Empfangs-Signalfeldstärke-Anzeigen- (RSSI-) Abtastprobe unter den vorgegebenen Intervallen,
(b) Berechnen (150) eines Langzeit-Mittelwertes aus den Abtastproben zu den vorgegebenen Zeitintervallen, sobald eine vorgegebene Anzahl der Abtast-proben empfangen wurde,
(c) Berechnen (150) eines Kurzzeit-Mittelwertes der Abtastproben,
(d) Vergleichen (160) des Langzeit-Mittelwertes mit einem vorgegebenen Schwellenwert,
(e) Vergleichen (170) des Kurzzeit-Mittelwertes mit dem Schwellenwert, wenn der Langzeit-Mittelwert unterhalb des Schwellenwertes liegt, und
(f) Feststellen (180), daß der Übergabe-Zustand vorliegt, wenn sowohl der Langzeit- als auch der Kurzzeit-Mittelwert unterhalb des Schwellenwertes liegen.

2. Verfahren nach Anspruch 1, das weiterhin den Schritt des
Aussendens einer Übergabe-Anforderung (180) an ein Steuergerät umfaßt, nachdem bestimmt wurde, daß ein Übergabe-Zustand vorliegt, wobei die Übergabe-Anforderung den zweiten Signalwert zum Vergleich mit Signalfeldstärke-Pegeln benachbarter Zellenpositionen einschließt.

3. Verfahren nach Anspruch 1, bei dem eine Zeitperiode, über die der erste Signalwert gemittelt wird, länger als eine Zeitperiode ist, über die das zweite Signal gemittelt wird.

4. Verfahren nach Anspruch 1, bei dem eine Zeitperiode, über die der zweite Signalwert gemittelt wird, mit einer Zeitperiode korreliert wird, über die ein Signalfeldstärkewert von Lokalisierungs-/Empfangsgeräten benachbarter Zellen gemessen wird.

5. Verfahren nach Anspruch 2, das weiterhin die Schritte des:
Setzens eines Übergabe-Schutzzeitgebers (508) nach dem Aussenden der Übergabe-Anforderung und die Rückkehr zum Schritt (a) umfaßt, wenn der Übergabe-Schutzzeitgeber abläuft, bevor ein Übergabe-Befehl von dem Steuergerät empfangen wird.

6. Sprachkanal-Vorrichtung zur korrekten Bestimmung, wann eine Telefongesprächsverbindung auf einer Mobilstation auf einem bestimmten Sprachkanal in einer Zellenposition auf einen Sprachkanal in einer anderen Zellenposition in einem zellularen System übergeben werden sollte, dadurch gekennzeichnet, daß die Vorrichtung folgendes umfaßt:
einen Empfangskanal zum Empfang von Signalen von der Mobilstation,
eine Zellen-Steuergeräte-Schnittstelle (148) zum Empfang eines Schwellenwertes von einem Zellen-Steuergerät,
ein Steuergerät (142), das eine Signalfeldstärke der empfangenen Signale darstellende Abtastproben von dem Empfangskanal empfängt, wobei das Steuergerät einen Langzeit- und einen Kurzzeit-Puffer und Speicherplätze für einen Langzeit-Mittelwert des Langzeit-Puffers und einen Kurzzeit-Mittelwert des Kurzzeit-Puffers führt, wobei das Steuergerät einen Prozessor einschließt, der einen Übergabe-Zustand feststellt, wenn sowohl der Langzeit-Mittelwert als auch der Kurzzeit-Mittelwert kleiner als der Schwellenwert sind, wobei das Steuergerät eine Übergabe-Anforderung, die den Kurzzeit-Mittelwert einschließt, an das Zellen-Steuergerät über die Zellen-Steuergeräte-Schnittstelle bei Bestimmung des Übergabe-Zustandes sendet.

## Revendications

1. Procédé pour déterminer de manière correcte, dans un système cellulaire, le moment où un appel téléphonique sur une station mobile sur un canal vocal particulier d'un site cellulaire doit être transféré sur un canal vocal d'un autre site cellulaire, caractérisé en ce que le procédé comporte les étapes consistant à :
(a) échantillonner (190) des signaux reçus depuis ladite station mobile pour déterminer une force de signal desdits signaux reçus à des intervalles prédéterminés et délivrer en sortie un échantillon d'indication de force de signal reçu (RSSI) auxdits intervalles prédéterminés,
(b) calculer (150) une moyenne à long terme desdits échantillons auxdits intervalles prédéterminés une fois qu'un nombre prédéterminé desdits échantillons a été reçu,
(c) calculer (150) une moyenne à court terme desdits échantillons,
(d) comparer (160) ladite moyenne à long terme à une valeur de seuil prédéterminée,
(e) comparer (170) ladite moyenne à court terme à ladite valeur de seuil si ladite moyenne à long terme est inférieure à ladite valeur de seuil, et
(f) déterminer (180) que ladite condition de transfert existe si lesdites moyennes à long terme et à court terme sont toutes deux inférieures à ladite valeur de seuil.

2. Procédé selon la revendication 1, comportant de plus l'étape consistant à :
envoyer une demande de transfert (180) à un contrôleur après avoir déterminé qu'une condition de transfert existe, ladite demande de transfert incluant ladite seconde valeur de signal pour une comparaison à des niveaux de force de signal de sites cellulaires adjacents.

3. Procédé selon la revendication 1, dans lequel la période de temps sur laquelle ladite première valeur de signal est mise en moyenne est plus longue que la période de temps sur laquelle ledit second signal est mis en moyenne.

4. Procédé selon la revendication 1, dans lequel la période de temps sur laquelle ladite seconde valeur de signal est mise en moyenne est corrélée à une période de temps sur laquelle une valeur de force de signal est mesurée par des dispositifs de localisation/réception de cellules adjacentes.

5. Procédé selon la revendication 2, comportant de plus les étapes consistant à :
établir une minuterie de sécurité de transfert (508) après avoir envoyé ladite demande de transfert, et
revenir à l'étape (a) si ladite minuterie de sécurité de transfert expire avant qu'une instruction de transfert soit reçue depuis ledit contrôleur.

6. Dispositif à canal vocal pour déterminer de manière correcte, dans un système cellulaire, le moment où un appel téléphonique sur une station mobile sur un canal vocal particulier d'un site cellulaire doit être transféré sur un canal vocal d'un autre site cellulaire, caractérisé en ce que le dispositif comporte :
un canal de réception pour recevoir des signaux provenant de ladite station mobile,
une interface de contrôleur de cellules (148) pour recevoir une valeur de seuil depuis un contrôleur de cellules,
un contrôleur (142) recevant des échantillons représentant une force de signal desdits signaux reçus depuis ledit canal de réception, ledit contrôleur maintenant un tampon à long terme et un tampon à court terme et des emplacements de mémorisation pour une moyenne à long terme dudit tampon à long terme et une moyenne à court terme dudit tampon à court terme, ledit contrôleur incluant un processeur qui détermine une condition de transfert lorsque ladite moyenne à long terme et ladite moyenne à court terme sont toutes deux inférieures à ladite valeur de seuil, ledit contrôleur envoyant une demande de transfert, incluant ladite moyenne à court terme, dans ledit contrôleur de cellules à travers ladite interface de contrôleur de cellules lors de la détermination de ladite condition de transfert.
